| (19) | Europäisches Patentamt<br>European Patent Office<br>Office européen des brevets | (11) | **EP 1 246 373 B1** |

(12) **FASCICULE DE BREVET EUROPEEN**

(45) Date de publication et mention
de la délivrance du brevet:
**22.03.2006 Bulletin 2006/12**

(51) Int Cl.:
*H04B 7/08* *(2006.01)*    *H04B 15/00* *(2006.01)*

(21) Numéro de dépôt: **01403289.0**

(22) Date de dépôt: **18.12.2001**

(54) **Procédé et dispositif pour le traitement d'interférences dans des signaux reçus par un réseau de capteurs**

Verfahren und Vorrichtung zur Behandlung von Interferenzen in von einem Antennennetzwerk empfangenen Signalen

Method and apparatus for processing interferences in signals received by an antenna array

(84) Etats contractants désignés:
**DE GB IT**

(30) Priorité: **22.12.2000 FR 0016874**

(43) Date de publication de la demande:
**02.10.2002 Bulletin 2002/40**

(73) Titulaire: **Thales**
**92200 Neuilly Sur Seine (FR)**

(72) Inventeurs:
• **Leblond, Valéry,**
**c/o Thales Intellectual Property**
**94117 Arcueil Cédex (FR)**

• **Renard, Alain,**
**c/o Thales Intellectual Property**
**94117 Arcueil Cédex (FR)**

(74) Mandataire: **Dudouit, Isabelle**
**Marks & Clerk France**
**31-33 Avenue Aristide Briand**
**94117 Arcueil Cedex (FR)**

(56) Documents cités:
**EP-A- 0 650 268       EP-A- 0 869 627**
**EP-A- 0 975 100       GB-A- 2 316 232**
**US-A- 5 550 872       US-A- 5 955 987**

## Description

L'invention concerne un procédé et un dispositif pour traiter, éliminer, les interférences présentes dans un ou plusieurs signaux reçus par un réseau de N capteurs.

Elle s'applique pour l'élimination d'interférences volontaires ou involontaires, occupant tout ou partie du spectre du signal satellite reçu par des récepteurs GPS (Global Positioning system).

Elle trouve son application pour améliorer les processus de traitement des interférences dans différents traitements de signal.

Elle peut aussi être utilisée pour éliminer, d'un signal reçu par des récepteurs standards, des interférences volontaires ou involontaires.

Les systèmes permettant d'effectuer des traitements anti-interférences sur la base des réseaux d'antennes, utilisent à ce jour des méthodes prenant en compte, comme données d'entrée, la totalité de la bande du signal GPS reçu.

La plupart de ces méthodes consistent à former une antenne apparente en combinant de manière pondérée les signaux issus de capteurs élémentaires. Il s'agit en fait d'utiliser un réseau de capteurs séparés dans l'espace et, par une combinaison « constructive » ou « destructive », d'atténuer très fortement le signal dans toutes les directions identifiées comme étant occupées par une ou plusieurs interférences. Typiquement, il s'agit de principes classiques de CRPA (antenne à diagramme de rayonnement contrôlé ou en abrégé anglo-saxon Controled Radiation Pattern Antenna) mettant en oeuvre des algorithmes d'inversion de puissance particulièrement bien adaptés aux signaux utiles de bruit de niveau inférieur au bruit thermique, ce qui est le cas du signal GPS.

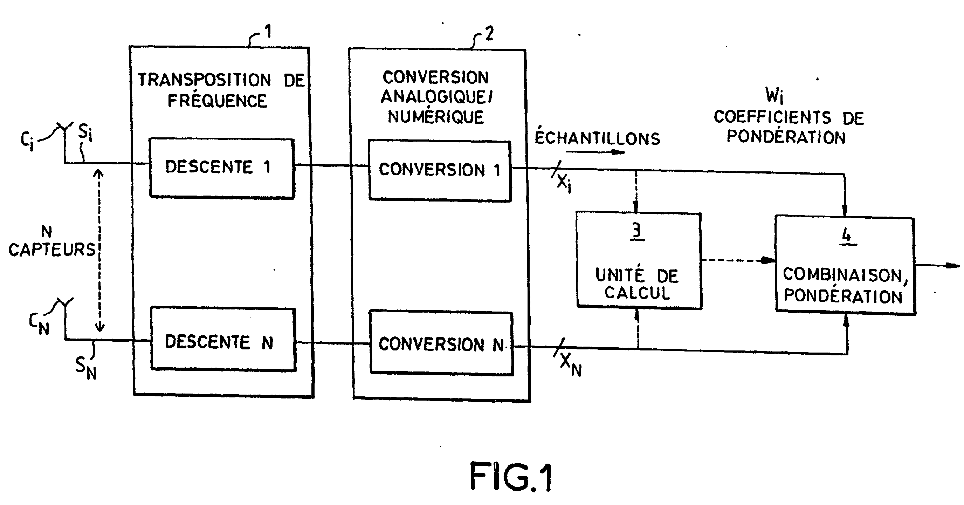

L'algorithme de CRPA utilise, pour déterminer les coefficients de combinaison précités, le principe décrit ci-après en relation avec la figure 1.

Les signaux analogiques radioélectriques, $s_i$, GPS sont reçus par les N capteurs Ci d'un réseau d'antennes. Ces signaux $s_i$ ont un spectre constitué d'une bande de 20 MHz centrée sur la fréquence $L_1$ = 1.575 GHz (fréquence porteuse), respectivement la fréquence $L_2$ = 1.273 GHz, ces deux fréquences porteuses étant connues du domaine GPS. Ils sont transmis à un ensemble 1 de circuits de transposition, pour être transposés à une fréquence intermédiaire Fi plus faible que la fréquence porteuse $L_1$ (respectivement $L_2$). La transposition de fréquences est effectuée par des méthodes connues de l'Homme du métier, telle que celle décrite dans le brevet FR 2.742.612 du demandeur par exemple. Ces signaux ainsi amenés à une fréquence intermédiaire sont éventuellement filtrés. L'ensemble des traitements est réalisé par un processus analogique connu de l'Homme du métier. Les signaux filtrés sont ensuite numérisés à l'aide d'un CAN, 2, (convertisseur analogique numérique), qui travaille à une fréquence d'échantillonnage Fe choisie pour respecter le théorème de Shannon. Le CAN génère des échantillons numériques qui contiennent des informations GPS à une fréquence de cadence Fe et sur la totalité de la bande du signal utile et qui sont appliqués à une unité de calcul 3 et à un bloc de traitement 4.

L'unité de calcul 3 identifie, sur la base d'un algorithme de type CRPA et en mettant en oeuvre un calcul d'inversion de puissance, les directions dans lesquelles sont présentes des sources d'interférences. Cette unité 3 détermine les différents coefficients de pondération $W_i$ à appliquer aux échantillons numériques.

Les coefficients de pondération $w_i$ sont appliqués en entrée du bloc de traitement 4 aux échantillons $x_i$ provenant directement du CAN 2, le bloc 4 étant adapté à faire disparaître les sources d'interférences dans les échantillons reconstitués, par exemple par combinaison des échantillons pondérés.

L'algorithme de détermination des coefficients de pondération à appliquer aux échantillons, est particulièrement bien adapté à des signaux dits « bande étroite », c'est-à-dire de type Onde pure (CW continuous Wave) ou peu étalés en fréquence, typiquement pour des rapports largeur$_{fréquentielle}$/fréquence$_{centrale}$ très très inférieurs à l'unité. Lorsqu'une interférence intervient sur une bande fréquentielle importante, par exemple sur la totalité des 20 MHz dans le cas du GPS code P présent sur la bande $L_2$, ou encore du code C/A présent sur la bande $L_1$, les interférences sont moins bien éliminées par l'algorithme d'inversion de puissance ou plus vraisemblablement le nombre de degrés de liberté disponibles, donc le nombre d'interférences auxquelles le récepteur est résistant s'en voit diminué.

D'autre part, dans le cas de porteurs mobiles (récepteurs de type GPS ou stations comportant des récepteurs GPS) et/ou pour des interférences mobiles dans l'espace, l'estimation de la puissance et la combinaison à effectuer est plus bruitée. Elle est donc moins précise instantanément, et il peut en résulter des sauts de phase dans le signal GPS reconstitué qui vont sensiblement perturber son fonctionnement nominal. Une des méthodes mises en oeuvre pour remédier à ce problème, consiste à intégrer dans l'algorithme de traitement, un stratagème de lissage, par exemple par addition de bruit fictif, afin de réduire le bruit résultant sur les coefficients de pondération et donc sur la phase du signal résultant. De tels artifices peuvent, toutefois, détériorer la sensibilité du système anti-perturbateurs, c'est-à-dire le niveau d'interférence minimal à partir duquel l'algorithme d'inversion de puissance va « voir » et traiter l'interférence. En ajoutant du bruit fictif, le plancher global de signal au-dessus duquel l'algorithme « verra » l'interférence est remonté et les « petites » interférences ne sont pas vues.

Le document US-A-5 550 872 décrit un procédé pour éliminer les interférences des signaux reçus par un récepteur en diversité.

Le document EP-A-0 869 627 applique des algorithmes d'inversion de puissance pour éliminer des interférences dans des signaux reçus par un réseau de N capteur. Ces brevets ne sont pas adaptés aux récepteurs GPS.

L'objet de l'invention concerne un procédé de traitement de signal permettant d'éliminer des interférences dans un signal reçu par un réseau de N capteurs, par exemple un signal satellite reçu par un récepteur GPS.

L'objet de l'invention concerne un procédé pour éliminer les interférences occupant une partie au moins du spectre d'un ou de plusieurs signaux reçus par un réseau de N capteurs comportant au moins des étapes où :

- on découpe chaque échantillon $x_1$ de signaux en K bandes de fréquence,
- on pondére les échantillons $x_{ik}$ obtenus par découpage, avec des coefficients de pondération $w_{ik}$ déterminés par traitement d'inversion de puissance,
- on combine par indice k de bande de fréquence donné les différents échantillons pondérés $w_{ik} \cdot x_{ik}$ afin d'obtenir des signaux $s_k$ correspondant à $\sum_{i=1}^{N} w_{ik} \cdot x_{ik}$ , avant d'effectuer la combinaison des signaux $s_k$ pour la totalité des bandes K, caractérisé en ce que l'on utilise un algorithme CRPA

(Controled Radiation Pattern Antenna) pour le traitement d'inversion de puissance.

Le procédé peut comporter au moins les étapes suivantes :

- numériser les signaux $s_i$ reçus par les capteurs en N échantillons numériques $x_i$,
- transmettre les $x_i$ échantillons numériques à K filtres $G_k$ afin de découper chaque échantillon $x_i$ en K bandes de fréquence,
- appliquer les $x_{ik}$ échantillons obtenus par découpage à :

  - une unité de calcul adaptée à déterminer les coefficients de pondération $w_{ik}$, par traitement d'inversion de puissance,

  - un bloc de traitement adapté à :

    - combiner pour un indice k de filtre donné les différents échantillons pondérés $w_{ik} \cdot x_{ik}$, pour obtenir un signal $s_k$ correspondant à $\sum_{i=1}^{N} w_{ik} \cdot x_{ik}$ ,

    - combiner les signaux $s_k$ afin d'obtenir un signal S' exempt en totalité ou en majorité d'interférences.

L'objet de l'invention concerne aussi un dispositif pour éliminer les interférences dans un ou plusieurs signaux si reçus par un réseau de N capteurs comportant au moins un ensemble de moyens adaptés à découper en fréquence chaque échantillon $x_i$ de signal en K bandes de fréquence, pondérer les échantillons $x_{ik}$ obtenus par découpage, combiner par indice k de bande de fréquence donné les différents échantillons pondérés $w_{ik} \cdot x_{ik}$ afin d'obtenir des signaux $s_k$ correspondant à $\sum_{i=1}^{N} w_{ik} \cdot x_{ik}$ , effectuer la combinaison des signaux $s_k$ pour la totalité des bandes K, caractérisé en ce que le traitement de puissance est par exemple un algorithme CRPA (Controled Radiation Pattern Antenna).

Selon un mode de réalisation, le dispositif comporte au moins :

- une chaîne de réception de signaux comportant des circuits de transposition en fréquence de la fréquence du signal initial à une fréquence intermédiaire et un CAN pour convertir le signal S en N échantillons numérisés,
- un dispositif adapté pour découper chaque signal numérisé $x_i$, en K bandes de fréquence afin de fournir N*K échantillons $x_{ik}$,
- une unité de calcul recevant les N*K échantillons et adaptée à déterminer des coefficients de pondération $w_{ik}$, par traitement d'inversion de puissance.
- un bloc de traitement recevant les coefficients de pondération $w_{ik}$ et les échantillons $x_{ik}$, ledit bloc étant adapté à appliquer les coefficients de pondération aux différents échantillons, à réaliser la combinaison d'une part pour un indice k donné des $X_{ik}$ échantillons pondérés avec k variant de 1 à K et d'autre part des K signaux $S_k$ avec k variant de 1 à K, afin d'obtenir un signal S'.

Le procédé et le dispositif selon l'invention sont apliqués par exemple pour éliminer les interférences dans des signaux émis par un satellite et reçu par un récepteur GPS, ou encore par un système de positionnement à étalement de spectre ou encore un système de navigation et de communication à étalement de spectre.

L'invention offre notamment les avantages suivants :

- elle permet de renforcer de manière très sensible les capacités de résistance aux perturbateurs (interférences volontaires ou involontaires),
- basée sur le principe du traitement « réseau » permettant de faire la suppression « spatiale », l'invention se libère des approximations « bandes étroites » classiquement utilisées,

- elle ramène pour le traitement adaptatif, moins de bruit dans la bande réduite, ce qui aura tendance à augmenter la sensibilité de l'algorithme utilisé,
- par adjonction d'un filtrage de Kalman,
- elle résorbe les défauts de traitement liés aux dynamiques des porteurs et des perturbateurs, et
- permet d'obtenir un processus adaptatif de correction des défauts susceptibles d'être introduit par la réalisation matérielle, évolution des capacités des composants en fonction de la thermique par exemple.

D'autres caractéristiques et avantages de l'invention apparaîtront à la lecture de la description détaillée qui suit donnée en référence aux dessins annexés dans lesquels :

- la figure 1 représente un exemple de récepteur GPS selon l'art antérieur,
- la figure 2 schématise une première mise en oeuvre de l'invention, et
- la figure 3 représente une deuxième mise en oeuvre de l'invention intégrant un filtre de Kalman.

Afin de mieux comprendre l'objet de l'invention, la description qui suit est donnée à titre d'exemple illustratif et nullement limitatif pour le traitement d'interférences dans des signaux reçus par des récepteurs GPS.

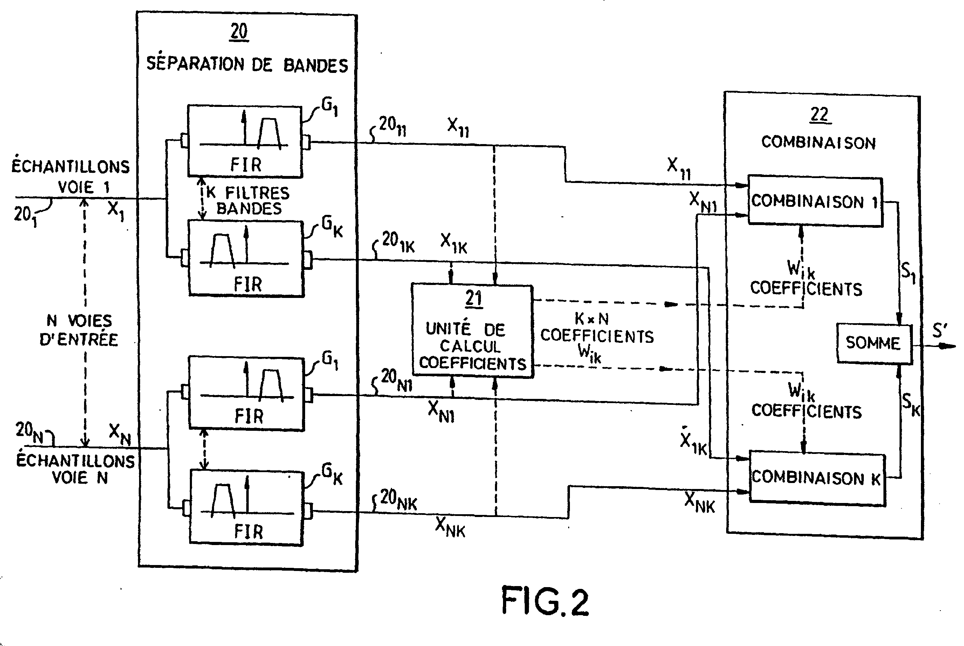

Le dispositif comporte de façon similaire à la figure 1, un réseau de N capteurs Ci, un bloc de transposition de fréquence et un CAN, non représentés sur la figure 2 pour des raisons de simplification.

Les N échantillons issus du CAN 2 (figure 1) sont appliqués à un dispositif 20 adapté à réaliser un découpage en fréquence. Le découpage en fréquence est effectué en utilisant un ensemble de K filtres numériques à réponse impulsionnelle finie, par exemple des filtres numériques FIR (Finite Impulse Response). Le dispositif 20 est pourvu de N voies d'entrée $20_i$ correspondant aux N échantillons $x_i$, i étant un indice désignant un échantillon, et N*K voies de sortie $20_{ik}$, avec k l'indice correspondant au filtre utilisé. Un échantillon $x_i$ est appliqué aux K filtres $G_k$ de manière à obtenir K signaux numériques désignés par $x_{ik}$, correspondant à K bandes plus restreintes que la bande initiale du signal.

Les caractéristiques de chacun et/ou de l'ensemble des K filtres $G_1$ à $G_K$ sont choisies pour que la somme des bandes de fréquence ainsi obtenues pour chaque échantillon $x_{ik}$, reconstitue de manière complète ou la plus complète possible la bande utile globale. Chaque échantillon a une bande utile de 20 MHz correspondant à la bande utile du signal GPS reçu sur le capteur Ci.

Le processus de séparation de bandes est réalisé, de préférence de manière numérique, ce qui permet un ajustement précis des coefficients des différents filtres afin de reconstituer sans distorsion la bande globale.

Les échantillons $x_{ik}$ ainsi obtenus sont appliqués d'une part à une unité de calcul 21 et d'autre part à un bloc 22 de traitement.

L'unité de calcul 21 est programmée pour effectuer un traitement d'inversion de puissance de type CRPA et pour calculer les coefficients de pondération $w_{ik}$ dédiés, bande par bande pour les N*K échantillons. A l'issu de ce calcul, le procédé est en possession de K jeux de coefficients de pondération (N*K coefficients), à appliquer aux différents échantillons $x_{ik}$ par exemple en entrée du bloc de traitement 22. Les coefficients de pondération ainsi obtenus sont mieux adaptés à l'élimination des K bandes d'interférences potentielles.

Le bloc de traitement 22 est adapté pour combiner les échantillons pondérés, $w_{ik}.x_{ik}$. L'étape de combinaison est réalisée par exemple en combinant dans un premier temps, pour un indice k de filtre donné, les différents échantillons pondérés en faisant varier l'indice i de 1 à N, pour obtenir plusieurs signaux $s_k$ correspondant

à $\sum_{i=1}^{N} w_{ik}.x_{ik}$ , puis dans un deuxième temps à

sommer les signaux $s_k$, $\sum_{k=1}^{K} s_k$ , cette somme représentant le signal reconstitué S' exempt ou pratiquement exempt des interférences. Les différents calculs sont réalisés à l'aide d'algorithme de traitement appropriés, les composants utilisés pouvant être de type FPGA ou ASIC.

Avantageusement, ce mode de mise en oeuvre permet de dépasser la limitation « bande étroite » des méthodes adaptatives d'inversion de puissance de type CRPA habituellement utilisées. D'autre part, en travaillant sur des bandes plus étroites que la bande du signal initial, le niveau de bruit est ramené au traitement donc, à traitement de filtrage équivalent, la sensibilité du procédé est augmentée.

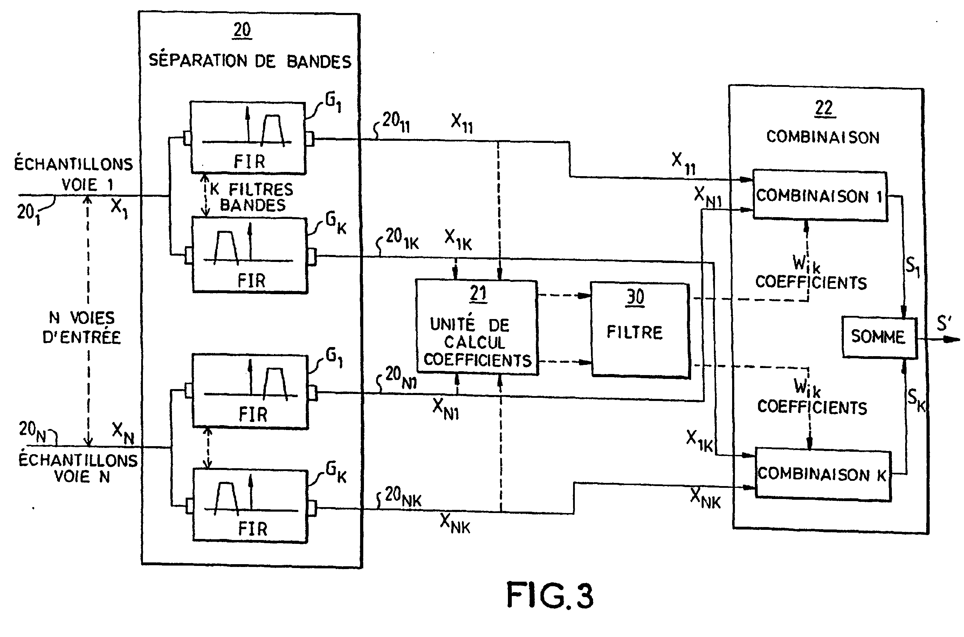

La figure 3 décrit un deuxième exemple de réalisation de l'invention où les éléments homologues repris de la figure 2 portent les mêmes références. Ce mode de réalisation est particulièrement bien adapté dans le cas d'interférences mobiles ou de porteurs mobiles.

Dans cet exemple les N*K coefficients de pondération obtenus par le calcul d'inversion de puissance sont appliqués à une étape de filtrage de dynamique, en utilisant par exemple un filtre de type Kalman, 30. Le filtre réalisé à l'aide d'un dispositif adapté, a notamment pour fonction de séparer les composantes directionnelles des N*K coefficients (à dynamique importante ou liée à la dynamique du perturbateur) des biais liés aux lignes de réception (composantes continues sur un horizon lointain).

La dynamique du perturbateur est par exemple spectrale, de type brouilleur à balayage, ou encore géographique de type brouilleur embarqué, commutation de brouilleur ou encore temporel de type brouilleur pulsé.

En adaptant le filtre de Kalman aux différentes dynamiques , il est possible de résorber d'une part les problèmes de dynamique liés au suivi de l'interférence au cours d'un mouvement, par exemple une contrainte opérationnelle forte, tout en corrigeant les biais récepteur, tels que les défauts HF en particulier : l'appairage en phase, l'amplitude, etc, qui sont limitatifs pour la performance d'élimination.

Classiquement dans un filtre de Kalman, l'adaptation se fait par le choix judicieux du « bruit de modèle », celui-ci étant généralement fixe et déterminé à la conception mais peut aussi être modifié en fonction de critère ne provenant pas des mesures trouvées.

Les coefficients filtrés sont ensuite envoyés vers le bloc de traitement 22 pour effectuer la combinaison des différents échantillons pondérés, cette opération étant réalisée par bande de fréquence, comme il a été décrit en relation avec la figure 2.

Le signal global après traitement est ensuite reconstitué par sommation, par exemple, avant d'être utilisé selon les méthodes connues de l'art antérieur comme un signal issu d'une CRPA classique.

Sans sortir du cadre de l'invention, le procédé s'applique dans le domaine de l'hybridation Inertie/GPS et aussi à tout domaine permettant de séparer les dynamiques incluses dans les coefficients de pondération.

Le procédé s'applique aussi à tous les signaux d'un système de positionnement à étalement de spectre, tel que le GPS, le système GLONASS (Global Orbiting Navigation Satellite System), Galiléo ou encore de tout système de nagivation et de communication à étalement de spectre.

## Revendications

1. Procédé pour éliminer les interférences occupant une partie au moins du spectre d'un ou de plusieurs signaux reçus par un réseau de N capteurs où :

   • on découpe chaque échantillon $x_i$ de signaux en K bandes de fréquence,
   • on pondère les échantillons $x_{ik}$ obtenus par découpage, avec des coefficients de pondération $w_{ik}$ déterminés par traitement d'inversion de puissance,
   • on combine par indice k de bande de fréquence donné les différents échantillons pondérés $w_{ik}.x_{ik}$ afin d'obtenir des signaux $s_k$ correspondant à $\sum_{i=1}^{N} w_{ik}.x_{ik}$, avant d'effectuer la combinaison des signaux $s_k$ pour la totalité des bandes K,

   caractérisé en ce que l'on utilise pour le traitement d'inversion de puissance un algorithme CRPA (Controled Radiation Pattern Antenna).

2. Procédé selon la revendication 1 caractérisé en ce qu'il comporte au moins les étapes suivantes :

   • numériser les signaux $s_i$ reçus par les capteurs en N échantillons numériques $x_i$,
   • transmettre les $x_i$ échantillons numériques à K filtres $G_k$ afin de découper chaque échantillon $x_i$ en K bandes de fréquence,
   • appliquer les $x_{ik}$ échantillons obtenus par découpage à :

     • une unité de calcul (3) adaptée à déterminer les coefficients de • pondération $w_{ik}$, déterminés par traitement d'inversion de puissance utilisant un algorithme CRPA,
     • un bloc de traitement (4) adapté à :

       • combiner pour un indice k de filtre donné les différents échantillons pondérés $w_{ik}$, $x_{ik}$, $S_k$ correspondant à $\sum_{i=1}^{N} w_{ik}.x_{ik}$, et à
       • combiner les signaux $s_k$ afin d'obtenir un signal S' exempt en totalité ou en majorité d'interférences.

3. Procédé selon la revendication 2 cractérisé en ce que l'étape de découpage utilise un filtre de type FIR.

4. Procédé selon l'une des revendications 1 à 3 caractérisé en ce qu'il comporte une étape de filtrage de la dynamique des coefficients issus de l'unité de calcul.

5. Dispositif pour éliminer les interférences dans un ou plusieurs signaux si reçus par un réseau de N capteurs comportant au moins un ensemble de moyens adaptés à découper en fréquence chaque échantillon $x_i$ de signal en K bandes de fréquence, pondérer avec des coefficients de pondération obtenus par traitement d'inversion de puissance les échantillons $x_{ik}$ obtenus par découpage, combiner par indice k de bande de fréquence donné les différents échantillons pondérés $w_{ik}.x_{ik}$ afin d'obtenir des signaux $s_k$ correspondant à $\sum_{i=1}^{N} w_{ik}.x_{ik}$, effectuer la combinaison des signaux $S_k$ pour la totalité des bandes K caractérisé en ce que le traitement d'inversion de puissance utilise un algorithme CRPA (Controled Radiation Pattern Antenna).

6. Dispositif selon la revendication 5 caractérisé en

**ce qu'**il comporte au moins :

• une chaîne de réception de signaux comportant des circuits de transposition en fréquence de la fréquence du signal initial à une fréquence intermédiaire et un CAN pour convertir le signal S en N échantillons numérisés,
• un dispositif (20) adapté pour découper en K bandes de fréquence chaque signal numérisé $x_i$, afin de fournir N*K échantillons $x_{ik}$,
• une unité de calcul (21) recevant les N*K échantillons et adaptée à déterminer des coefficients de pondération $w_{ik}$, par traitement d'inversion de puissance,
• un bloc de traitement (22) recevant les coefficients de pondération $w_{ik}$ et les échantillons $x_{ik}$, ledit bloc étant adapté à appliquer les coefficients de pondération aux différents échantillons, à réaliser la combinaison d'une part pour un indice k donné des $x_{ik}$ échantillons pondérés avec k variant de 1 à K et d'autre part des K signaux $S_k$ avec k variant de 1 à K, afin d'obtenir un signal S'.

7. Dispositif selon l'une des revendications 5 ou 6 **caractérisé en ce que** le moyen pour découper les échantillons en K bandes de fréquence est formé d'un ensemble de K filtres de type FIR.

8. Dispositif selon l'une des revendications 5 à 7 **caractérisé en ce qu'**il comporte un dispositif (30) pour filtrer la dynamique d'au moins un des coefficients de pondération tel qu'un filtre Kalman.

9. Application du procédé selon l'une des revendications 1 à 4 ou du dispositif selon l'une des revendications 5 à 8 pour éliminer les interférences dans des signaux émis par un satellite et reçu par un récepteur GPS, ou encore par un système de positionnement à étalement de spectre ou encore un système de navigation et de communication à étalement de spectre.

**Claims**

1. Method to eliminate interference occupying at least one part of the spectrum of one or more signals received by an array of N sensors, where:

   • each sample $x_i$ of signals is subdivided into K frequency bands,
   • the samples $x_{ik}$ obtained by subdivision are weighted with weighting coefficients $w_{ik}$ determined by power inversion processing,
   • the different weighted samples $w_{ik}.x_{ik}$ are combined by given frequency band index k to obtain

signals $s_k$ corresponding to $\sum_{i=1}^{N} w_{ik}.x_{ik}$, and then the signals $s_k$ are combined for the totality of the bands K,

**characterized in that** a CRPA (Controlled Radiation Pattern Antenna) algorithm is used for the power inversion processing.

2. Method according to Claim 1, **characterized in that** it comprises at least the following steps:

   • digitizing the signals $S_i$ received by the sensors into N digital samples $x_i$,
   • transmitting the $x_i$ digital samples to K filters $G_k$ in order to subdivide each sample $x_i$ into K frequency bands,
   • applying the $x_{ik}$ samples obtained by subdivision to:

     • a computation unit (3) adapted to determining the weighting coefficients $w_{ik}$, determined by power inversion processing using a CRPA algorithm,
     • a processing block (4) adapted to:

       • combining for a given filter index k the different weighted samples $w_{ik}.x_{ik}$, $s_k$ corresponding to $\sum_{i=1}^{N} w_{ik}.x_{ik}$, and to
       • combining the signals $s_k$ in order to obtain a signal S' that is totally or mostly free of interference.

3. Method according to Claim 2, **characterized in that** the subdivision step uses an FIR type filter.

4. Method according to one of Claims 1 to 3, **characterized in that** it comprises a step for filtering the dynamic range of the coefficients coming from the computation unit.

5. Device to eliminate interference in one or more signals $s_i$ received by an array of N sensors comprising at least one set of means adapted to subdividing each sample $x_i$ of signals into K frequency bands, weighting the samples $x_{ik}$ obtained by subdivision with weighting coefficients obtained by power inversion processing, combining the different weighted samples $w_{ik}.x_{ik}$ by given frequency band index k in order to obtain signals $s_k$ corresponding to

$$\sum_{i=1}^{N} w_{ik} \cdot x_{ik},$$ combining the signals $s_k$ for the totality of the bands K, **characterized in that** a CRPA (Controlled Radiation Pattern Antenna) algorithm is used by the power inversion processing.

6. Device according to Claim 5, **characterized in that** it comprises at least:

   • one signal reception chain comprising circuits for the frequency transposition of the frequency of the initial signal to an intermediate frequency and an ADC to convert the signal S into N digitized samples,
   • a device (20) adapted to subdividing each digitized signal $x_i$, into K frequency bands, in order to give N*K samples $X_{ik}$,
   • a computation unit (21) receiving the N*K samples and suited to determining weighting coefficients $w_{ik}$, by power inversion processing,
   • a processing block (22) receiving the weighting coefficients $w_{ik}$ and the samples $x_{ik}$, said block being suited to the application of the weighting coefficients to the different samples, carrying out the combination firstly for a given index k of the $x_{ik}$ weighted samples with k varying from 1 to K and secondly the K signals $s_k$ with k varying from 1 to K, in order to obtain a signal S'.

7. Device according to one of Claims 5 or 6, **characterized in that** the means for subdividing the samples into K frequency bands is formed by a set of K FIR type filters.

8. Device according to one of Claims 5 to 7, **characterized in that** it comprises a device (30) to filter the dynamic range of at least one of the weighting coefficients such as a Kalman filter.

9. Application of the method according to one of Claims 1 to 4 or of the device according to one of Claims 5 to 8, to eliminate the interference in the signals sent by a satellite and received by a GPS receiver or again by a spread-spectrum positioning system or again a spread-spectrum navigation and communications system.

**Patentansprüche**

1. Verfahren zur Unterdrückung der Interferenzen, die mindestens einen Teil des Spektrums eines oder mehrerer Signale einnehmen, die von einem Netz von N Sensoren empfangen werden, wobei:

   • jede Signaltastprobe $x_i$ in K Frequenzbänder zerschnitten wird,
   • die durch Zerschneiden erhaltenen Tastproben $x_{ik}$ mit durch Leistungsumkehrverarbeitung bestimmten Wichtungskoeffizienten $w_{ik}$ gewichtet werden,
   • durch einen gegebenen Frequenzband-Index k die verschiedenen gewichteten Tastproben $w_{ik} \cdot x_{ik}$ kombiniert werden, um Signale $s_k$ zu erhalten, die $\sum_{i=1}^{N} W_{ik} \cdot X_{ik}$ entsprechen, ehe die Kombination der Signale $s_k$ für die Gesamtheit der Bänder K durchgeführt wird,

   **dadurch gekennzeichnet, dass** zur Leistungsumkehrverarbeitung ein CRPA-Algorithmus (Controled Radiation Pattern Antenna) verwendet wird.

2. Verfahren nach Anspruch 1, **dadurch gekennzeichnet, dass** es mindestens die folgenden Schritte aufweist:

   • Digitalisieren der von den Sensoren empfangenen Signale $s_i$ in N digitale Tastproben $x_i$,
   • Übertragen der digitalen Tastproben $x_i$ zu K Filtern $G_k$, um jede Tastprobe $x_i$ in K Frequenzbänder zu zerschneiden,
   • die durch Zerschneiden erhaltenen Tastproben $x_{ik}$ anlegen an:

      • eine Recheneinheit (3), die ausgelegt ist, um die Wichtungskoeffizienten $w_{ik}$ zu bestimmen, die durch Leistungsumkehrverarbeitung unter Verwendung eines CRPA-Algorithmus bestimmt werden,
      • einen Verarbeitungsblock (4), der ausgelegt ist, um:

         • durch einen gegebenen Filter-Index k die verschiedenen gewichteten Tastproben $w_{ik}$, $x_{ik}$, $s_k$ zu kombinieren, die $\sum_{i=1}^{N} W_{ik} \cdot X_{ik}$ entsprechen, und
         • die Signale $s_k$ zu kombinieren, um ein Signal S' zu erhalten, das insgesamt oder zum größten Teil keine Interferenzen aufweist.

3. Verfahren nach Anspruch 2, **dadurch gekennzeichnet, dass** der Schritt des Zerschneidens einen Filter vom Typ FIR verwendet.

4. Verfahren nach einem der Ansprüche 1 bis 3, **dadurch gekennzeichnet, dass** es einen Schritt der Filterung der Dynamik der von der Recheneinheit stammenden Koeffizienten aufweist.

**5.** Vorrichtung zur Unterdrückung der Interferenzen in einem oder mehreren Signalen si, die von einem Netz von N Sensoren empfangen werden, die mindestens eine Einheit von Mitteln aufweist, die ausgelegt sind, um jede Signaltastprobe $x_i$ in K Frequenzbänder zu zerschneiden, die durch Zerschneiden erhaltenen Tastproben $x_{ik}$ mit Wichtungskoeffizienten zu wichten, die durch Leistungsumkehrverarbeitung erhalten werden, durch den gegebenen Frequenzband-Index k die verschiedenen gewichteten Tastproben $w_{ik}.x_{ik}$ zu kombinieren, um Signale $s_k$ zu erhalten, die $\displaystyle\sum_{i=1}^{N} w_{ik} \cdot x_{ik}$ entsprechen, die Kombination der Signale $S_k$ für die Gesamtheit der Bänder K durchzuführen, **dadurch gekennzeichnet, dass** die Leistungsumkehrverarbeitung einen CRPA-Algorithmus (Controled Radiation Pattern Antenna) verwendet.

**6.** Vorrichtung nach Anspruch 5, **dadurch gekennzeichnet, dass** sie mindestens aufweist:

> • eine Signalempfangskette, die Schaltungen zur Frequenzumsetzung der Frequenz des ursprünglichen Signals in eine Zwischenfrequenz und einen Analog-DigitalWandler aufweist, um das Signal S in N digitalisierte Tastproben umzuwandeln,
> • eine Vorrichtung (20), die ausgelegt ist, um jedes digitalisierte Signal $x_i$ in K Frequenzbänder zu zerschneiden, um N*K Tastproben $x_{ik}$ zu liefern,
> • eine Recheneinheit (21), die die N*K Tastproben empfängt und ausgelegt ist, um durch Leistungsumkehrverarbeitung Wichtungskoeffizienten $w_{ik}$ zu bestimmen,
> • einen Verarbeitungsblock (22), der die Wichtungskoeffizienten $w_{ik}$ und die Tastproben $x_{ik}$ empfängt, wobei der Block ausgelegt ist, um die Wichtungskoeffizienten an die verschiedenen Tastproben anzulegen und die Kombination einerseits für einen gegebenen Index k der gewichteten Tastproben $x_{ik}$, wobei k zwischen 1 und K variiert, und andererseits der K Signale $S_k$ durchzuführen, wobei k von 1 bis K variiert, um ein Signal S' zu erhalten.

**7.** Vorrichtung nach einem der Ansprüche 5 oder 6, **dadurch gekennzeichnet, dass** das Mittel zum Zerschneiden der Tastproben in K Frequenzbänder aus einer Einheit von K Filtern vom Typ FIR gebildet wird.

**8.** Vorrichtung nach einem der Ansprüche 5 bis 7, **dadurch gekennzeichnet, dass** sie eine Vorrichtung (30) aufweist, um die Dynamik mindestens eines der Wichtungskoeffizienten zu filtern, wie zum Beispiel ein Kalman-Filter.

**9.** Anwendung des Verfahrens nach einem der Ansprüche 1 bis 4 oder der Vorrichtung nach einem der Ansprüche 5 bis 8 zur Unterdrückung der Interferenzen in von einem Satelliten gesendeten und von einem GPS-Empfänger oder auch von einem Positioniersystem mit Spreizspektrum oder auch von einem Navigations- und Kommunikationssystem mit Spreizspektrum empfangenen Signalen.

FIG.1

FIG.2

FIG.3

EP 1 246 373 B1